# EUROPÄISCHE PATENTSCHRIFT

(11) **EP 2 488 412 B1**
(45) Veröffentlichungstag und Bekanntmachung des Hinweises auf die Patenterteilung: **15.01.2014**
(21) Anmeldenummer: 10768187.6
(22) Anmeldetag: 12.10.2010
(51) Int. Cl.: B64C 21/06, B64D 33/02

(54) **STRÖMUNGSKÖRPER INSBESONDERE FÜR LUFTFAHRZEUGE**
FLOW BODY, IN PARTICULAR FOR AIRCRAFT
CORPS SOUMIS À UN ÉCOULEMENT, DESTINÉ NOTAMMENT À DES AÉRONEFS

(30) Priorität: 12.10.2009 DE 102009049049; 12.10.2009 US 250590 P
(43) Veröffentlichungstag der Anmeldung: 22.08.2012
(73) Patentinhaber: Airbus Operations GmbH, 21129 Hamburg (DE)
(72) Erfinder: GERBER, Martin, 28357 Bremen (DE); SCHRAUF, Geza, 28209 Bremen (DE)
(74) Vertreter: UEXKÜLL & STOLBERG
(86) Internationale Anmeldenummer: PCT/EP2010/006218
(87) Internationale Veröffentlichungsnummer: WO 2011/045027

(56) Entgegenhaltungen:
- EP-A2- 0 955 235
- EP-A2- 1 998 028
- WO-A2-2009/023354
- US-A- 4 666 104

## Beschreibung

Die Erfindung betrifft einen Strömungskörper, insbesondere für Luftfahrzeuge mit einer Außenseite.

Die Erfindung betrifft insbesondere einen Strömungskörper, der an seiner Außenseite mindestens eine Strömungsbeeinflussungs-Vorrichtung zur Beeinflussung der Strömung des Fluids, das den Strömungskörper in einer bestimmungsgemäßen Anströmrichtung anströmt, aufweist. Die Strömungsbeeinflussungs-Vorrichtung weist eine Mehrzahl von Einsaugöffnungen auf, die in zumindest einem Segment der Außenseite angeordnet sind, sowie eine Saugvorrichtung auf, mit der an der Außenseite strömendes Fluid abgesaugt werden kann, um die strömungstechnischen Eigenschaften des Strömungskörpers zu verbessern.

Der EP 1 998 028 A2 und der WO 2009/023354 A2 sind jeweils ein Strömungskörper mit einer Strömungsoberfläche entnehmbar, an der Öffnungen zum Absaugen der den Strömungskörper umströmenden Luft aufweist.

Im zeitgenössischen Flugzeugbau werden Komponenten wie Tragflügel, Triebwerksgondeln und Leitwerke verwendet, die während des Flugbetriebes von Umgebungsluft umströmt werden. Grundsätzlich stellen sich zwei verschiedene Strömungszustände in der Luft, die die Flugzeugkomponenten umströmt, ein. In den Strömungsschichten, die von der Flugzeugkomponente weiter entfernt sind, liegt eine reibungslose Außenströmung vor, und in Strömungsschichten der Luft, die unmittelbar an der Flugzeugkomponente vorbeiströmen, befindet sich eine Grenzschichtströmung mit laminarer und/oder turbulenter Strömung. Solche Grenzschichtströmungen sind meistens nicht über die gesamte Länge des Strömungskörpers oder der Flugzeugkomponente turbulent, sondern weisen im Allgemeinen in Strömungsrichtung gesehen zunächst einen laminaren Strömungsbereich und dann einen turbulenten Strömungsbereich auf, wobei der laminare Strömungsbereich wesentlich kleiner ist als der sich einstellende turbulente Strömungsbereich. Bei Verkehrsflugzeugen, die im Mittelstreckenbetrieb verwendet werden, führt diese Verteilung zu einem Reibungsanteil von ca. 50% am Gesamtwiderstand des Flugzeuges. Zur Reduktion des Luftwiderstandes sind im Stand der Technik Transitionskontrollen vorgeschlagen worden, bei denen mittels Grenzschichtabsaugung eine bauteilbezogene Aufrechterhaltung der laminaren Grenzschichtströmung erreicht werden kann.

In bisherigen Grenzschichtabsaugungssystemen werden Pumpen-Kompressoraggregate zur Absaugung der den Strömungskörper umfließenden Grenzschicht verwendet. Die Absaugung erfolgt dabei lokal an Bauteilen wie Tragflügel, Triebwerksgondel oder Seitenleitwerk, wobei die zum Betrieb der Pumpen-Kompressoraggregate aufzuwendende elektrische Energie über hydraulische Systeme bereit gestellt wird, und dabei beispielsweise Treibfluid von dem Klimaanlagensystem des Flugzeugs zum Betreiben der Pumpe verwendet wird. Die Pumpen sind über Rohrleitungssysteme mit Öffnungen an der Oberfläche beispielsweise eines Tragflügels verbunden, um den Luftmassenstrom absaugen zu können.

Das Pumpen-Kompressoraggregat bei den bekannten Absaugsystemen muss jedoch bei der Energiebilanzierung und auch bei der Gewichtsbetrachtung des Flugzeuges berücksichtigt und unweigerlich als Mehraufwand angesehen werden. Das zusätzliche Gewicht, das diese Systeme an Bord eines Flugzeuges bringen sowie der energetische Zusatzverbrauch führen dazu, dass der Wirkungsgrad des Flugzeuges verschlechtert wird.

Die Erfindung macht es sich zur Aufgabe, eine Vorrichtung der eingangs genannten Art bereitzustellen, mit einem möglichst geringen Gesamtgewicht und einem niedrigen Energiebedarf.

Diese Aufgabe wird mit den Merkmalen des Patentanspruchs 1 gelöst. Weitere Ausführungsformen sind in den auf diesen zurückbezogenen Unteransprüchen angegeben.

Erfindungsgemäß weist ein Strömungskörper, insbesondere für Luftfahrzeuge, eine Außenseite, die bestimmungsgemäß von einem Fluid in einer angeströmten Richtung angeströmt wird auf, wobei der Strömungskörper an seiner Außenseite mindestens eine Strömungsbeeinflussungs-Vorrichtung aufweist, mit einer Mehrzahl von Mikroperforationen, die zumindest an einem Segment der Außenseite angeordnet sein können, mindestens einer Verbindungskammer oder einem Verbindungskanal, die mit den Mikroperforationen über mindestens eine Saugkammer verbunden sein kann, so dass durch die Mikroperforationen strömendes Fluid über mindestens eine Saugkammer in den Verbindungskanal strömen kann, mindestens einer Saugvorrichtung mit einem ersten Einlass, der mit dem Verbindungskanal in Verbindung stehen kann, einem zweiten Einlass, der mit mindestens einer Staufluid-Zufuhrleitung in Verbindung stehen kann und insbesondere der Einlass der Staufluid-Zufuhrleitung sein kann. Die Staufluid-Zufuhrleitung ist in einem entgegengesetzt zu der Anströmrichtung orientierten Bereich des Strömungskörpers gelegen. Weiterhin weist der Strömungskörper eine Auslassvorrichtung zum Auslassen des Fluids auf. Die Saugvorrichtung ist derart ausgeführt, dass diese in vorbestimmten Flugbereichen oder Flugzuständen des Flugzeugs durch Fluid, welches durch die Staufluid-Zufuhrleitung in diese strömt, derart angetrieben wird, dass diese Fluid durch die Mikroperforationen aus der Umgebung des Strömungskörpers absaugt wird. Dabei sind die Staufluid-Zufuhrleitung und die Ansaugvorrichtung derart ausgeführt, dass die Ansaugvorrichtung ausreichend angetrieben wird, um Fluid mit vorbestimmtem Durchsatz durch die Perforationen anzusaugen.Eine solche Anordnung bietet grundsätzlich den Vorteil, dass durch die bauteilbezogene Laminarisierung der Grenzschicht eine erhebliche Reduzierung des Kraftstoffverbrauchs und des Schadstoffausstoßes des Verkehrsflugzeuges erzielt wird. Darüber hinaus bietet die Verwendung der Saugvorrichtung den Vorteil, dass gegenüber einem Pumpen-Kompressoraggregat zum einen Gewicht eingespart werden kann und zum anderen keine bordseitige elektrische Energiezufuhr notwendig ist. Die Saugvorrichtung wird durch die Luft aus Bereichen am Flugzeug betrieben, an denen Stauluft oder anliegt, oder aus Bereichen, die diesen nahe gelegen sind oder an denen ausreichender Druck herrscht, so dass die Saugvorrichtung mit Druckluft oder Stauluft mit ausreichendem Druck und/oder Durchsatz versorgt wird. Nach einem Ausführungsbeispiel der Erfindung wird Fluid oder Luft unmittelbar aus einem des Flugzeugs in die Saugvororichtung eingeführt, an dem Stauluft ("Ram Air") vorliegt.

Weiterhin kann zwischen den Mikroperforationen und der Verbindungskanal mindestens eine Blende vorgesehen sein, an der ein vorbestimmter Druckabfall der eingesaugten Strömung erreicht wird.

Mit der Blende ist die Saugvorrichtung an eine Vielzahl verschiedener Flugzustände anpassbar, wobei sie dann in den Bereichen eines Flugzustandes selbstjustierend funktioniert. In diesem Ausführungsbeispiel kann insbesondere vorgesehen sein, dass sich die Saugstrahlpumpe selbsttätig auf eine vorbestimmte Saugleistung einstellt. In einer Weiterführung der Erfindung kann die Saugstrahlpumpe derart ausgeführt sind, dass sich diese in Abhängigkeit des Druckes des in die Staufluid-Zufuhrleitung strömenden Fluids oder des Durchsatzes dieses Fluids selbsttätig auf eine vorbestimmte Saugleistung einstellt. Die Blende kann einsetzbar und ersetzbar angeordnet sein.

Darüber hinaus streht die Staufluid-Zufuhrleitung mit einer Öffnung in Verbindung, wobei die Öffnung an der Außenseite des Strömungskörpers im Bereich eines Staupunkts des Strömungskörpers angeordnet sein kann, an dem der Wert der Summe aus dynamischem Druck und statischem Druck in dem den Strömungskörper anströmenden Fluid einen Maximalwert aufweist. Durch eine derartige Anordnung kann auf besonders einfache Weise sichergestellt werden, dass der Luftmassenstrom, der zum Betrieb der Saugvorrichtung benötigt wird, stets mit einem maximalen Druck oder abhängig von den jeweiligen Fugzuständen des Flugzeugs mit durchschnittlich optimalem Druck in die Staufluid-Zufuhrleitung geführt wird, wodurch eine sichere Funktion der Saugvorrichtung gewährleistet werden kann, da der Gesamtdruck am Einlass der Zufuhrleitung größer ist als der Gesamtdruck, der an den Mikroperforationen anliegt. Die Öffnung der Staufluid-Zufuhrleitung muss jedoch nicht zwingend direkt im Staupunkt anliegen, sondern kann in einem Umgebungsbereich angebracht sein, der in der Nähe des tatsächlichen Staupunktes gelegen ist. An der Öffnung oder in dessen Umgebungsbereich weist das Fluid einen verglichen mit dem Gesamtdruck in anderen Strömungsbereichen des Fluids höheren Gesamtdruck auf.

Weiterhin kann mit der Auslassvorrichtung über den ersten Einlass und/oder den zweiten Einlass angesaugtes Fluid aus der Saugvorrichtung auslassbar sein, d.h. über eine Auslassvorrichtung entfernt werden. Hieraus ergibt sich der Vorteil, dass ein Aufbau mit einer besonders einfachen Struktur realisiert werden kann, da auf eine Mehrzahl einzelner Auslassvorrichtungen verzichtet werden kann. Dabei werden die Luftströme, die über den ersten und den zweiten Einlass angesaugt werden,in der Saugvorrichtung miteinander vermengt und über eine einzige, gemeinsame Auslassvorrichtung zusammen ausgelassen.

Weiterhin kann die Saugvorrichtung eine selbstregulierende Saugstrahlpumpe sein, so dass ein konstanter Druck in dem ersten Einlass erzeugbar ist. Dies bietet den Vorteil, dass die Luft die den Strömungskörper anströmt als Treibfluid, zum Antreiben der Saugvorrichtung verwendet wird und somit auf die Verwendung beispielweise des Klimaanlagen Fluid als Treibfluid verzichtet werden kann.

Weiterhin kann der Strömungskörper eine Triebwerksgondel sein, mit einer im Wesentlichen zylindrischen äußeren Gestalt, wobei die Längsachse A der Triebwerksgondel im Wesentlichen parallel zur Anströmrichtung F des Fluides verläuft und/oder sich die Verbindungskanal in Umfangsrichtung um die Längsachse A herum erstreckt.

Weiterhin kann das Segment in der Außenseite, in dem die Strömungsbeeinflussungs-Vorrichtung angeordnet ist, sich in Umfangsrichtung zumindest teilweise erstrecken und in einer Längsrichtung der Triebwerksgondel sich über einen Bereich von 0% bis 50% der Oberfläche beginnend ab dem Staupunkt der Triebwerksgondel erstrecken.

In einer alternativen Ausführungsform der Erfindung kann der Strömungskörper ein Flugwerk sein, mit einer Flugwerk-Tiefenrichtung einer Flugwerk-Spannweitenrichtung und einer Flugwerk-Dickenrichtung, wobei sich die Verbindungskanal vorzugsweise entlang der Flugwerk-Spannweitenrichtung erstreckt.

Die Bedeutung des Wortes "Flugwerk" ist im Folgenden generalisiert zu verstehen als ein Sammelbegriff, der ein Seitenleitwerk, ein Höhenleitwerk sowie sämtliche Ausführungsformen von Tragflächen oder Flügeln eines Luftfahrzeuges umschließt. Weiterhin kann das Segment in der Außenseite, in dem die Strömungsbeeinflussungs-Vorrichtung angeordnet ist, sich in der Flugwerk-Spannweitenrichtung zumindest teilweise erstrecken und in der Flugwerk-Tiefenrichtung sich über einen Bereich von 0% bis 75% der Oberfläche beginnend von dem Staupunkt des Flugwerks erstrecken.

Das Fluid ist bei der Anwendung der Erfindung auf ein Flugzeug die Luft, die das Flugzeug in dessen bestimmungsgemäßen Betriebszustand in der Luft anströmt. In diesem Fall kann die Staufluid-Zufuhrleitung insbesondere als Stauluft-Zufuhrleitung bezeichnet werden. Die Erfindung ist generell jedoch auch anwendbar auf Schiffe. Diesem Fall ist das Fluid das das Schiff umströmende Wasser.

Nach der Erfindung ist insbesondere ein Strömungskörper insbesondere für Luftfahrzeuge vorgesehen, aufweisend eine Außenschale, an der sich bei einer bestimmungsgemäßen Umströmung des Strömungskörpers durch ein Fluid in einer Anströmrichtung ein Stauluftbereich und ein in Strömungsrichtung hinter diesem gelegener Umströmungsbereich ergibt, und mindestens eine Strömungsbeeinflussungs-Vorrichtung, die aufweist:
■ eine Mehrzahl von durch die Außenschale durchgehenden Mikroperforationen, die in zumindest einem im Umströmungsbereich gelegenen Segment der Außenschale angeordnet sind;
■ eine Mehrzahl von jeweils im Inneren des Strömungskörpers an der Außenschale anliegenden Saugkammern, deren obere Wandung jeweils Teil der Außenhaut ist oder an dieser anliegt, dass die Mikroperforationen in die Saugkammern hineinreichen, und deren untere Wandung jeweils zumindest eine Blendenöffnung oder einen Ventildurchlass aufweist, wobei Seitenwandungen der Saugkammern deren Innenräume gegeneinander abgrenzen,
■ mindestens ein Verbindungskanal, der sich quer zur Strömungsrichtung und von der Außenschale aus gesehen unterhalb der Saugkammern gelegen ist,
■ zumindest eine an den Verbindungskanal angeschlossene Saugvorrichtung mit einer ersten Einlassöffnung zum Absaugen von durch die Mikroperforationen eingetretenen Fluid, der mit dem Verbindungskanal in Verbindung steht.

Die Strömungsbeeinflussungs-Vorrichtung weist zusätzlich eine Staufluid-Zufuhrleitung auf, die eine im Stauluftbereich gelegene Staufluid-Einlassöffnung aufweist. Weiterhin weist die Saugvorrichtung ein eine Ableitungskammer bildendes Saugvorrichtungs-Gehäuse mit der Einlassöffnung und einer Auslassöffnung und eine Düse mit einer Einlassöffnung, an die die Staufluid-Zufuhrleitung angeschlossen ist, auf. Die Auslassöffnung ist in der Verlängerung der Längsrichtung der Düse gelegen. Die Saugvorrichtung kann derart in dem Strömungskörper positionier sein, dass die Auslassöffnung in der Tiefenrichtung des Strömungskörpers gesehen im Bereich zwischen 40 % und 60 % der gesamten Strömungskörpertiefe gelegen ist.

Nach einer Ausführungsform der Erfindung ist vorgesehen, dass die gesamte sich in Tiefenrichtung des Strömungskörpers erstreckende Länge des Saugvorrichtungs-Gehäuses zwischen 700 mm und 900 mm beträgt. Weiterhin kann nach einer Ausführungsform der Erfindung vorgesehen sein, dass die Mikroperforationen einen Durchmesser zwischen 10 µm und 1.000 µm haben.

Der Abstand zwischen jeweils zwei benachbarten Mikroperforationen kann insbesondere zwischen 0,1 mm und 2,5 mm betragen.

Nach einer Ausführungsform der Erfindung ist vorgesehen, dass die Strömungsbeeinflussungs-Vorrichtung derart ausgeführt ist, dass an der Auslassöffnung des Saugvorrichtungs-Gehäuses ein Fluidmassenstrom vorliegt, bei dem das Fluid an der Auslassöffnung auf den Umgebungsdruck des Strömungskörpers im jeweiligen Betriebszustand oder auf den an derselben Tiefenposition des Strömungskörpers an dessen Außenseite herrschenden Unterdruck jeweils mit einer maximalen Abweichung von 20 % entspannt ist.

Weiterhin kann bei einer Ausführungsform der Erfindung die Staufluid-Zufuhrleitung an einer Öffnung in den Strömungskörper einmünden, wobei die Öffnung derart an der Außenseite des Strömungskörpers angeordnet ist, dass in Strömungsrichtung gesehen der Staupunkt des Strömungskörpers ohne der Öffnung innerhalb der Öffnung gelegen ist.

Nach einer weiteren Ausführungsform der Erfindung kann die Auslassvorrichtung an der Mischkammer angeschlossen und als Diffusor ausgebildet sein, der sich im Inneren des Strömungskörpers öffnet, dass der Strömungskörper in seinem in Strömungsrichtung gesehen hinteren Bereich eine Auslassvorrichtung aufweist, durch die im Inneren des Strömungskörpers befindliche Luft in die Umgebung des Strömungskörpers entweichen kann.

Bei der Anwendung von Ausführungsformen des Strömungskörpers als Teil eines Flugwerks kann inbesondere vorgesehen sein, dass das Saugvorrichtungs-Gehäuse zwei Einlassöffnungen aufweist, die einander gegenüberliegend angeordnet sind, und dass der Strömungsköper eine Außenschale mit einem ersten und einem zweiten Umströmungsbereich und einem zwischen diesen gelegenen Stauluftbereich aufweist, wobei die Außenseiten des ersten und des zweiten Umströmungsbereichs entgegengesetzt zueinander gelegen sind.

Im Folgenden werden Ausführungsbeispiele der Erfindung anhand der beigefügten, schematischen Figuren beschrieben, die zeigen:
- Fig. 1 eine perspektivische Ansicht eines Flugzeuges mit erfindungsgemäß vorgesehenen Strömungskörpern,
- Fig. 2 einen Schnitt durch eine Triebwerksgondel als Beispiel eines erfindungsgemäßen Strömungskörpers,
- Fig. 3 eine vergrößerte Darstellung des Details D-D aus Fig. 2,
- Fig. 4 einen Teilschnitt die Außenhaut eines erfindungsgemäßen Strömungskörpers,
- Fig. 5 einen Seitenschnitt einer Saugvorrichtung nach einer Ausführungform der Erfindung,
- Fig. 6 eine Seitenansicht auf ein Heckteil eines Flugzeuges mit einem Seitenleitwerk,
- Fig. 7 eine Teilschnittansicht entlang der Schnittlinie A-A aus Fig. 4

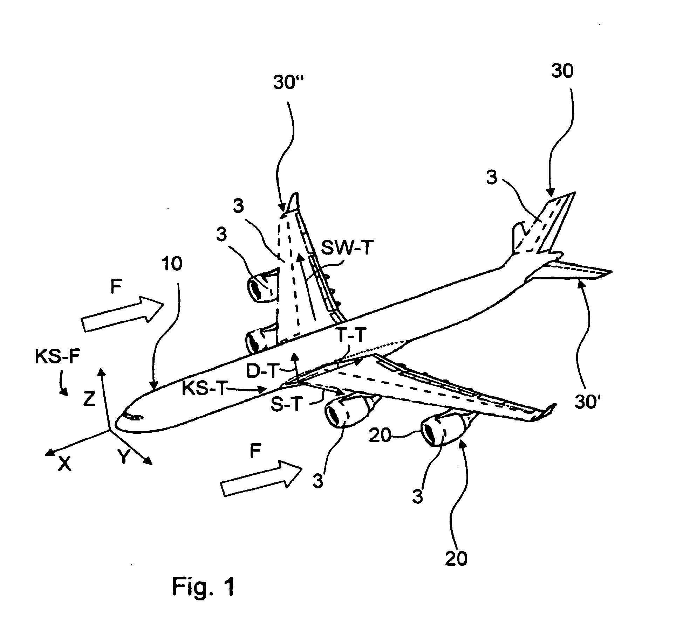

In der Fig. 1 ist ein Flugzeug 10 in perspektivischer Darstellung abgebildet, mit Strömungskörpem nach der Erfindung, zu denen beispielsweise Triebwerksgondeln 20, das Seitenleitwerk 30, Höhenleitwerke 30' sowie die Tragflächen bzw. Flügel 30" gehören. In Fig. 1 ist darüber hinaus ein flugzeugseitiges, ortsfestes Koordinatensystem angegeben, wobei die X-Richtung eine Flugzeug-Tiefenrichtung angibt, die von dem Flugzeugheck zur Flugzeugspitze verläuft, wobei die Y-Richtung entlang der Flügel-Spannweitenrichtung verläuft und wobei die Z-Richtung eine Flugzeughöhen-Richtung angibt. In die Figur 1 ist auch ein Koordinantensystem KS-T eines Tragflügels 30" des Flugzeugs 10 eingetragen. In Bezug auf das Seitenleitwerk 30 weist die Y-Richtung in eine Seitenleitwerkdickenrichtung und die Z-Richtung in eine Seitenleitwerkspannweitenrichtung.

Das Koordinatensystem KS-T des Tragflügels T ist ein lokales Koordinatensystem und ist aus einer Spannweitenrichtung S-T, einer Flügeltiefenrichtung T-T und einer Flügeldickenrichtung D-T gebildet. Das lokale Koordinatensystem KS-T für den Tragflügel T ist nach einer erfindungsgemäßen Definition derart orientiert, dass die lokale Tragflügel-Tiefenrichtung FT parallel zur Längsachse X des Flugzeug-Koordinatensystems KS-F verläuft. Die Orientierung der Achsen und des Ursprungs des lokalen Koordinatensystems KS-T des Tragflügels T kann insbesondere weiterhin aufgrund der sich in jedem Punkt des Tragflügels T jeweils ergebenden kleinsten Querschnittsfläche des Tragflügels T definiert sein, wobei der Ursprung des lokalen Koordinatensystems KS-T der sich für die jeweilige Querschnittsfläche ergebende und in dieser gelegene Flächenschwerpunkt ist und die lokale Tragflügel-Dickenrichtung D-T sowie die lokale Tragflügel-Tiefenrichtung T-T in der jeweils kleinsten Querschnittsfläche gelegen sind.

Nach einer alternativen erfindungsgemäßen Definition ist das lokale Koordinatensystem KS-T für den Tragflügel T derart orientiert, dass die Flügeltiefenrichtung FT des Koordinatensystems KS-T des Tragflügels T in der X-Richtung oder Längsrichtung des Flugzeug-Koordinatensystems KS-F und dass die Flügeldickenrichtung FD des Koordinatensystems KS-T des Tragflügels T in der Z-Richtung des Flugzeug-Koordinatensystems KS-F oder der Richtung der Hochachse Z des Flugzeugs verläuft.

Insbesondere kann die Außenseite der Außenschale derart bestimmt sein, dass deren Außenkontur 31 a an jeder Stelle des Bereichs F2 in Tiefenrichtung T-B einen Winkel gegenüber der Längsachse A des Strömungskörpers 10 von maximal 30 Grad hat.

Beispielhaft und nicht einschränkend sind auf dem Seitenleitwerk 30, den Tragflächen oder Tragflügeln 30" sowie auf den Triebwerksgondeln 20 Segmente 3 angegeben, in denen Mikroperforationen 2 oder Öffnungen mit einer Größe von jeweils im Mikrometer-Bereich, im Folgenden auch Mikroperforations-Öffnungen genannt, an einem Bereich oder Segment der Außenseite oder Außenschale der Flugzeugkomponente vorgesehen sind. Solche Segmente 3, im Folgenden auch als Bereiche 3 benannt, können jedoch auch auf der Oberfläche der Höhenleitwerke 30" bzw. auf der Oberfläche der Außenseite des Flugzeugrumpfes vorgesehen sein.

Im normalen Flugzustand bewegt sich das dargestellte Flugzeug 10 relativ zu einem Fluid, im Allgemeinen zu atmosphärischer Luft, die sofern das Flugzeug 10 als Referenzpunkt genommen wird, das Flugzeug in den bestimmungsgemäßen Flugzuständen in einer Anströmrichtung F anströmt

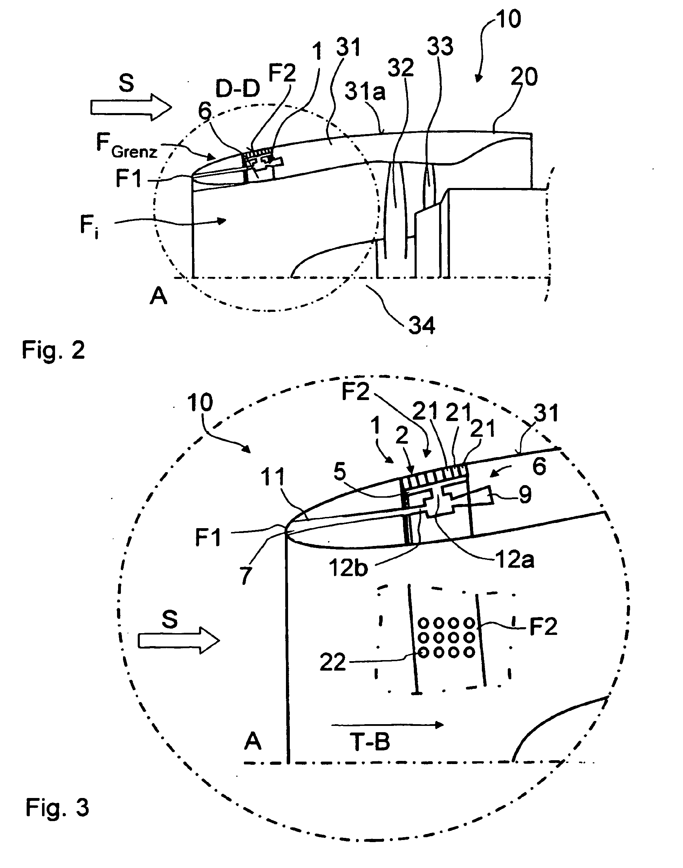

In Fig. 2 ist eine Schnittansicht einer erfindungsgemäßen Triebwerksgondel 20 als Beispiel des erfindungsgemäßen Strömungskörpers 10 dargestellt. Die Triebwerksgondel 20 ist in einer Schnittdarstellung entlang ihrer Längsachse A dargestellt, wobei nur der obere Teil der Schnittansicht gezeigt ist. die Tiefenrichtung T-B des Strömungskörpers 10, die entlang der Längsachse verläuft, beginnt jeweils am Staupunkt. Die Triebwerksgondel 20 kann dabei eine im Wesentlichen zylindrische äußere Form mit einer Längsachse A haben. Im Wesentlichen ist hierbei so zu verstehen, dass das die Triebwerksgondel 20 z.B. eine achsensymmetrische oder auch spiegelsymmetrische Form aufweisen kann, bezogen auf die Längsachse A bzw. eine Ebene durch die die Längsachse A verläuft. Die Längsachse A der Triebwerksgondel 20 kann sich insbesondere auch aus der Verbindungslinie der Flächenschwerpunkte der von der Außenfläche umgebenen Querschnittsflächen ergeben. Beispielhaft und nicht einschränkend weist die in den Figuren 2 und 3 schematisch dargestellte Triebwerksgondel 20 eine Außenseite 31a auf, die über eine Strebe 33 mit der Nabe 322 verbunden ist. Die Verbindungsstrebe 33 kann dabei gleichzeitig als ein Stator 33 ausgeführt sein. An der Nabe 322 ist ein Rotor 32 drehbar gelagert, bei dem es sich beispielsweise und nicht einschränkend um den Fan und/oder um ein Verdichterschaufelrad des Triebwerks handeln kann. Im Betriebszustand, d.h. wenn das Flugzeug sich relativ zur Umgebungsluft bewegt, strömt die Luft entlang der Anströmrichtung F auf die Triebwerksgondel 20 zu. Dabei fließt ein Teil der Strömung in das Innere der Triebwerksgondel 20 und wird in der Turbine, die sich im inneren der Triebwerksgondel 20 befindet, mit Treibstoff angereichert, so dass in dieser Luft enthaltene Sauerstoff mit dem Treibstoffgemisch später gezündet wird, um den Vortrieb des Flugzeuges sicherzustellen. Dieser Teil der Strömung ist in der Fig. 2 mit Fᵢ bezeichnet. Ein zweiter Teil der Strömung fließt außerhalb der Triebwerksgondel entlang der Außenseite 1 an der Gondel vorbei. Wie beschrieben, bildet sich in der Nähe der Außenseite 31a eine Grenzschicht aus, die in Fig. 2 mit F_{Grenz} bezeichnet wird. Ein weitaus geringerer Teil der Strömung trifft nahezu rechtwinklig auf den vorderen Bereich der Triebwerksgondel, und generell im Stauluftbereich F1 des Strömungskörpers 10, auf. An der Außenseite 31 a des Strömungskörpers 10 ist eine Strömungsbeeinflussungs-Vorrichtung 1 mit einer Saugvorrichtung 6 vorgesehen.

Die erfindungsgemäße Strömungsbeeinflussungs-Vorrichtung 1 kann jedoch auch in Triebswerksgondeln verwendet werden, deren struktureller Aufbau von dem hier gezeigten abweicht.

Generell weist der Strömungskörper 10 auf: eine Außenschale 31 mit einem sich bei einer bestimmungsgemäßen Umströmung des Strömungskörpers 10 durch ein Fluid in einer Anströmrichtung S ergebenden Stauluftbereich F1, in dem zumindest in Reiseflugzuständen und einem in Strömungsrichtung hinter diesem gelegenen Umströmungsbereich F2 und mindestens eine Strömungsbeeinflussungs-Vorrichtung 1.

Zur besseren Übersichtlichkeit ist das Detail D-D aus Fig. 2 vergrößert in Fig. 3 dargestellt, so dass insbesondere die Strömungsbeeinflussungs-Vorrichtung 1 mit ihren Bestandteilen besser erkennbar ist. Im Folgenden soll anhand von Fig. 3 die Funktionsweise der Strömungsbeeinflussungs-Vorrichtung 1 erklärt werden. Wie bereits oben genannt fließt die Grenzschichtströmung F_{Grenz} entlang einer Oberfläche der Außenseite 31 a an der Triebwerksgondel 20 vorbei. Im Bereich der Außenseite 31 a sind eine Mehrzahl von Mikroperforationen 2 an der Strömungsbeeinflussungs-Vorrichtung 1 vorgesehen. Durch diese Mikroperforationen 2 kann Luft aus der Grenzschichtströmung F_{Grenz} in das Innere der Strömungsbeeinflussungs-Vorrichtung 1 eingesaugt werden. Die Mikroperforationen 2 stehen über Saugkammern 21 mit einem Verbindungskanal 5 strömungstechnisch in Verbindung, so dass bei einem entsprechenden Druckgefälle Fluid, welches aus der Grenzschicht F_{Grenz} durch die Mikroperforationen 2 strömt, durch die Saugkammern 21 hindurch in den Verbindungskanal 5 geleitet wird. Der Verbindungskanal 5 kann dabei auch als Saugleitung oder Kanal oder, im Beispiel der Triebwerksgondeln 30 als Ringkanal ausgeführt sein, so dass diese Begriffe im Sinne der hier vorliegenden Erfindung als Synonyme zu verstehen sind.

Der Verbindungskanal 5 ist weiterhin über einen ersten Einlass 12a mit der Saugvorrichtung 6 oder einer Strömungskammer 12c derselben verbunden. Die Saugvorrichtung 6 steht darüber hinaus über einem zweiten Einlass 12b mit einer Staufluid-Zufuhrleitung 11 in Verbindung, die über eine Öffnung 7 in der Außenseite mit der Umgebung der Triebwerksgondel 20 verbunden ist. Wie aus Fig. 3 ersichtlich, ist die Öffnung 7 in der Nähe des Staupunktes angeordnet, an dem sich die das Triebwerk anströmende Luft derart anstaut, dass der Gesamtdruck einen Maximalwert erreicht. Mit anderen Worten, der Staupunkt ist im Folgenden als der Punkt zu verstehen, an dem die Summe aus statischem Druck und dynamischem Druck bezogen auf den Druck in dem Fluid, das sich in der Umgebung des Staupunktes befindet, am größten ist. Durch diesen Gesamtdruck wird das Fluid durch die Öffnung 7 in die Staufluid-Zufuhrleitung 11 geführt und fließt damit durch die Saugvorrichtung 6 hindurch und in eine Auslassvorrichtung 9. Beim Passieren der Saugvorrichtung 6 wird durch die Druckdifferenz ein Unterdruck in dem ersten Einlass 12a erzeugt, so dass Fluid aus der Verbindungskanal 5 in die Saugvorrichtung über den ersten Einlass 12a gesaugt wird. Folglich ergibt sich ein Strömungsverlauf des Fluids aus der Grenzschichtströmung F_{Grenz} durch die Mikroperforationen 2 über die Saugkammern 21 in die Verbindungskanal 5 aufgrund des mit der Saugvorrichtung 6 erzeugten Unterdrucks. Vorzugsweise liegt der Unterdruck in dem ersten Einlass 12a bzw. in den Saugkammern 21 in einem Wertebereich von 200 Pa bis 1.500 Pa. Der genaue Wert ist hängt stark von der Oberflächenform der Außenseite 31 a d.h. von dem Profil der Triebwerksgondel 20 bzw. des Flügels ab.

Die Strömungsbeeinflussungs-Vorrichtung 1 verwendet dabei zur Erzeugung des Unterdrucks eine Saugvorrichtung 6, die als Saugstrahlpumpe vorgesehen ist, wobei über den Lufteinlauf bestehend aus der Öffnung 7 und der Staufluid-Zufuhrleitung 11, Stauluft ("ram air") aus dem Bereich des Staupunktes der Triebwerksgondel 20 zum Betreiben der Saugvorrichtung 6 eingesaugt wird. Durch einen derartigen Betrieb der Saugvorrichtung 6 wird selbsttätig Fluid aus der Grenzschichtströmung F_{Grenz} durch die Mikroperforationen 2 angesaugt. Dabei ist die Saugvorrichtung 6 derart dimensioniert, dass die Strömungsbeeinflussungs-Vorrichtung 1 alle Rohrreibungsverluste sowie Eintritts- und Austrittsverluste zur Realisierung einer notwendigen Absauggeschwindigkeit zur Beeinflussung der Umströmung des Strömungskörpers und insbesondere für eine laminarisierte Grenzschichtströmung F_{Grenz} an der Außenseite 31 a der Triebwerksgondel 20 berücksichtigt. Mit anderen Worten basiert die Funktion der Strömungsbeeinflussungs-Vorrichtung 1 auf der Druckdifferenz zwischen dem Gesamtdruck am Staupunkt der Triebwerksgondel 20 und dem Gesamtdruck, der an der Einsaugöffnung 2 anliegt. Sofern das Flugzeug nicht still steht, d.h. sobald sich eine Relativbewegung einstellt wie beispielsweise bei Flugzuständen wie Start, Steigflug, Sinkflug, Landung oder konstantem Flug herrschen an der Öffnung 7 im Staupunkt und an den Mikroperforationen 2 unterschiedliche Gesamtdrücke. Damit kann auf besonders einfache Weise ohne zusätzlichen Energieaufwand sichergestellt werden, dass an der Öffnung 7 ein höherer Druck als an der Einsaugöffnung 2 herrscht und damit Fluid aus der Grenzschichtströmung F_{Grenz} an der Außenseite 31 a abgesaugt wird. Die Verbindungskanal 5 ist, wie oben erwähnt, über den ersten Einlass 12a mit der Saugvorrichtung 6 verbunden und erstreckt sich bei der Triebswerksgondel 20 in der Umfangsrichtung und beispielsweise in einem Winkel von 360° um die Längsachse A der Gondel 20. Bei einem Ausführungsbeispiel der Erfindung in ihrer Anwendung auf eine Triebwerksgondel bildet die Verbindungskanal 5 eine in sich geschlossene Saugleitung in Form eines Ringkanals. Die Verbindungskanal 5 muss jedoch nicht in Umfangsrichtung der Triebwerksgondel 20 umlaufend, sondern kann auch in der Umfangsrichtung segmentweise umlaufend ausgeführt sein.

In einem Ausführungsbeispiel der Erfindung kann zwischen jeder Saugkammer 21 und der Verbindungskanal 5 eine Blende 22 vorgesehen sein. Über die Blende 22 wird der jeweils notwendige bzw. gewünschte Unterdruck in den Saugkammern 21 zur Ansaugung, aus dem durch die Saugvorrichtung 6 beeinflussten Druckgefälle, eingestellt. Ein Auführungsbeispiel der Erfindung kann derart ausgeführt sein, dass je größer die Relativgeschwindigkeit des Flugzeuges zu dem umströmenden Fluid beträgt, desto größer der Gesamtdruck am Staupunkt der Triebwerksgondel 20 und desto größer das Druckgefälle entlang der Staufluid-Zufuhrleitung 11 zur Auslassvorrichtung 9 beträgt, so dass der erzeugte Unterdruck in den Saugkammern 21 direkt abhängig von der Geschwindigkeit des Flugzeuges ist. Die Blende 22 wird bei der Konstruktion der Saugvorrichtung 1 dimensioniert und dabei z.B. auf den Betrieb des Flugzeugs im Reiseflug. Bei diesem Ausführungsbeispiel werden Flugzustände bei er Landung oder beim Start des Flugzeugs bei der Konfiguration der Blende 22 vernachlässigt, so dass die Dimensionierung der Blende 22 allein auf einen gewünschten Druck erfolgt, der bei der Reisekonfiguration des Flugzeugs in den Saugkammern 21 herrschen soll. Mit der Blende 22 kann zum einen die Menge des Luftmassenstroms eingestellt werden, der durch die Mikroperforationen 2 in die Verbindungskanal 5 einströmt. Zum anderen kann auch die Richtung des Luftmassenstroms in der Verbindungskanal 5 durch Variation der Blende 22 geregelt werden, die ein Abfliesen der Luftmasse aus der Saugvorrichtung 6 in die Auslassvorrichtung 9 begünstigen. Die Blende 22 ist vorzugsweise für den Betrieb des Flugzeugs fix eingestellt. In speziellen Anwendungsfällen kann die Blende 22 auch während des Flugbetriebs einstellbar ausgeführt sein, wobei die Größe der Öffnungen der Blende 22 variiert werden können.

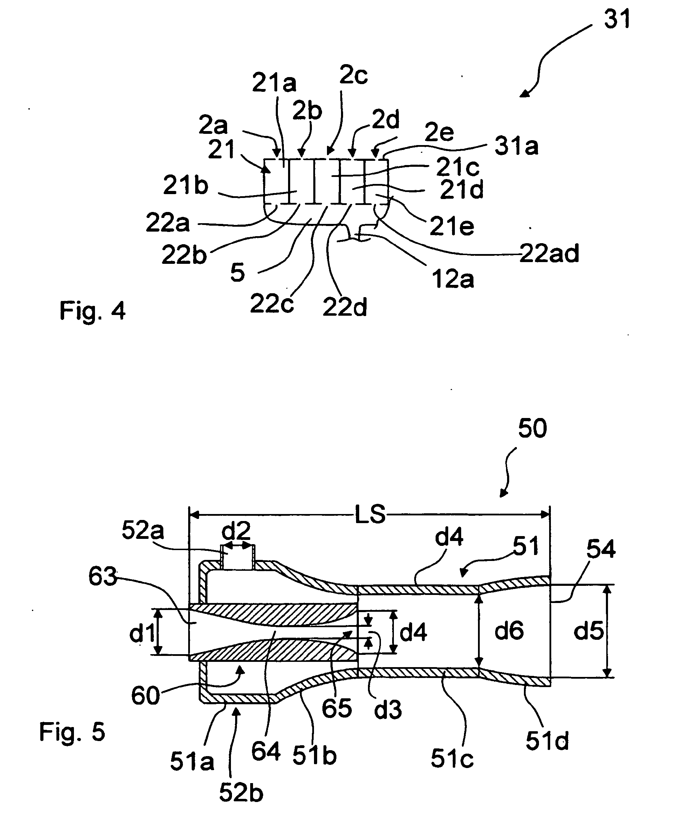

In der Figur 4 is eine Teilansicht der Außenschale 31 dargestellt mit den Saugkammern 21 a, 21 b, 21c, 21d, 21 e, den Blendenöffnungen 21 a bzw. 21 b bzw. 21 c bzw. 21 d bzw. 21e und den Mikroperforationen 2a bzw. 2b bzw. 2c bzw. 2d bzw. 2e.

Die Saugkammern 21 sind umlaufend ausgebildet und verlaufen entlang der oder im Wesentlichen in Umfangsrichtung der Triebwerksgondel 20, und können sich dabei z.B. in einem Winkelbereich von 360° oder einen Teilbereich dessen um die Längsachse A des Triebwerks herum erstrecken. Sie weisen dabei bevorzugt eine rechteckige Querschnittsform, mit einer Breite von 10 mm bis 40 mm und einer Höhe von 10 mm bis 13 mm auf. Die Breite der Saugkammer 21 verläuft dabei entlang oder im Wesentlichen in axialer Triebwerksrichtung entlang der Längsachse A der Triebwerksgondel 20 und die Höhe verläuft entlang oder im Wesentlichen in einer radialen Richtung der Triebwerksgondel 20 oder in der Richtung der Flächennormalen auf der jeweiligen Stelle der Außenseite derselben. An einem der Längsachse abgewandten radialen Ende der Saugkammer 21, steht jede Saugkammer 21 mit einem Bereich 3 der Außenseite 31a in dem eine Mehrzahl der Mikroperforationen 2 in Verbindung. Somit strömt Luft durch eine Vielzahl von Mikroperforationen 2 in eine Saugkammer 21 hinein, d.h. jede Saugkammer 21 steht mit mehreren Mikroperforationen 2 in Verbindung. Die Blende 22 ist an einem der Längsachse A der Triebwerksgondel 20 zugewandten Ende der Saugkammer 21 angeordnet.

Die Blende 22 weist generell Blendenöffnungen auf mit einem Öffnungsdurchmesser der im Bereich von 1mm bis 35mm liegt. Nach einem Ausführungsbeispiel der Erfindung nimmt die Größe der Blendenöffnungen in Anströmungsrichtung F entlang des jeweiligen Strömungskörpers, d.h. entgegen der Längsrichtung X des Flugzeugs vom Bug zum Heck ab. Entlang der Anströmungsrichtung F bildet sich auf der mit dem Fluid umströmten Oberfläche der Außenseite 31 a eine Druckverteilung mit einem Druckgefälle in Anströmungsrichtung F aus, bei dem der an den Mikroperforationen 2 anliegende Außendruck in X-Richtung des Flugzeuges abnimmt. Um diesem Gefälle Rechnung zu tragen, kann der Druck in der jeweiligen Saugkammer 21 durch eine geeignete Wahl der Größe der Blendenöffnung, die einer oder mehreren Perforationsöffnungen zugeordnet ist, entsprechend angepasst werden. Insbesondere kann vorgesehen sein, dass Blendenöffnungen, die an relativ stromabwärts gelegenen Saugkammern gelegen sind oder mit diesen korrespondieren, geometrisch kleiner dimensioniert werden, als Blendenöffnungen, die mit relativ stromaufwärts liegenden Saugkammer 21 strömungstechnisch verbunden sind. In einer bevorzugten Ausführungsform der Erfindung ist jeweils eine Blendenöffnung einer Saugkammer 21 zugeordnet. Alternativ können zumindest abschnittsweise eine Saugkammer 21 mehrere Blendenöffnungen aufweisen. Auch kann eine Saugkammer 21 jeweils eine Perforationsöffnung oder mehrere Perforationsöffnungen aufweisen.

Durch die Verwendung mehrerer einzelner, in Strömungsrichtung F gesehen voneinander abgegrenzter Saugkammern 21 ist strömungstechnisch vorteilhaft gegenüber einer Ausführungsform, bei der die Mikroperforationen die angesaugte Luft direkt in die gemeinsame, dann als Sammelsaugleitung dienende Verbindungskanal 5 leiten. Bei letztgenannten Aufbauten würde das in der Grenzschicht F_{Grenz} vorherrschende Druckgefälle dazu führen, dass in einem stromaufwärts befindlichen Bereich der Verbindungskanal 5 Luft durch die Mikroperforationen 2 in die Verbindungskanal 5 strömt und in einem stromabwärts gelegen Bereich Luft wieder über die Mikroperforationen aus der Verbindungskanal 5 in die Grenzschicht hinaustritt. Dieser unter strömungstechnischen Gesichtspunkten ungewünschte Effekt kann durch den erfindungsgemäßen Aufbau unterbunden werden.

Die Mikroperforationen 2 sind als Bohrungen bzw. Einlassöffnungen in der Außenseite 31 a der Triebwerksgondel 20 vorgesehen und haben insbesondere einen Durchmesser, der im Bereich von 10µm bis 1000µm liegt. In speziellen Ausführungsformen der Erfindung liegt der Durchmesser im Bereich von 40 µm bis 100 µm. Diese Bohrungen sind voneinander beabstandet, wobei dieser Abstand insbesondere im Bereich von 0,1mm bis 2,5mm und in bevorzugten Varianten der Erfindung im Bereich von 0,5 mm bis 0,9 mm liegt. Diese Größenordnung bietet den Vorteil, dass dadurch ein ausreichender Durchfluss durch die Mikroperforationen 2 ermöglicht wird, wobei gleichzeitig die Oberfläche der Außenseite 31 a eine strömungsgünstige glatte Oberfläche aufweist.

Eien Ausführungsform der Saugvorrichtung 6 ist in der Figur 5 dargestellt. Diese weist ein eine Ableitungskammer 60 bildendes Saugvorrichtungs-Gehäuse 51 mit der Einlassöffnung 12a und einer Auslassöffnung 54 und eine Düse 60 mit einer Einlassöffnung 12b, 63, an die die Staufluid-Zufuhrleitung 11 angeschlossen ist, auf. Die Auslassöffnung 54 ist in der Verlängerung der Längsrichtung LD der Düse 60 gelegen. Weiterhin ist die Saugvorrichtung 6 derart in dem Strömungskörper 10 positioniert, dass die Auslassöffnung 54 in der Tiefenrichtung des Strömungskörpers 10 gesehen im Bereich zwischen 40 % und 60 % der gesamten Strömungskörpertiefe gelegen ist.

Die Auslassvorrichtung 9 kann derart an einer Mischkammer 5 angeschlossen und als Diffusor ausgebildet sein, dass dieser sich im Inneren des Strömungskörpers öffnet. Der Strömungskörper 10 weist in seinem in Strömungsrichtung gesehen hinteren Bereich die Auslassvorrichtung auf, durch die im Inneren 10a des Strömungskörpers befindliche Luft in die Umgebung des Strömungskörpers entweichen kann. Das Gehäuse 51 weist vorzugsweise einen ersten 51a, zweiten 51b, dritten 51c und vieren Abschnitt 51d auf. Der vierte Abschnitt bildet die Auslassvorrichtung, Diese ist derart gestaltet, dass die als Fluid möglichst reibungsfrei aus dem Gehäuses 51 austreten kann. Der Teil 51 a ist als Ableitungskammer ausgebildet. Der zweite Teil kann als Teil der Ableitungskammer mit einem Verjüngungsbereich ausgebildet sein. Der Dritte Gehäuseteil 51 c kann als Rohr mit konstantem Innendurchmesser ausgebildet sein.

In der Düse 60 ist die Engstelle 64 mit dem Durchmesser d3 insbesondere 30 bis 7o% des Querschnitts des Einlasses 63. Der Durchmesser d3 des Auslasses 65 beträgt insbesondere zwischen 30 und 70% der Größe des Durchmessers d1.

Die Position der Auslassöffnung liegt insbesondere im Bereich zwischen 40 und 60 % der Profiltiefe oder Strömungskörpertiefe des gesamten Strömungskörpers 10.

Die Länge LP des Saugvorrichtung kann insbesondere zwischen 500 und 1.000 mm betragen.

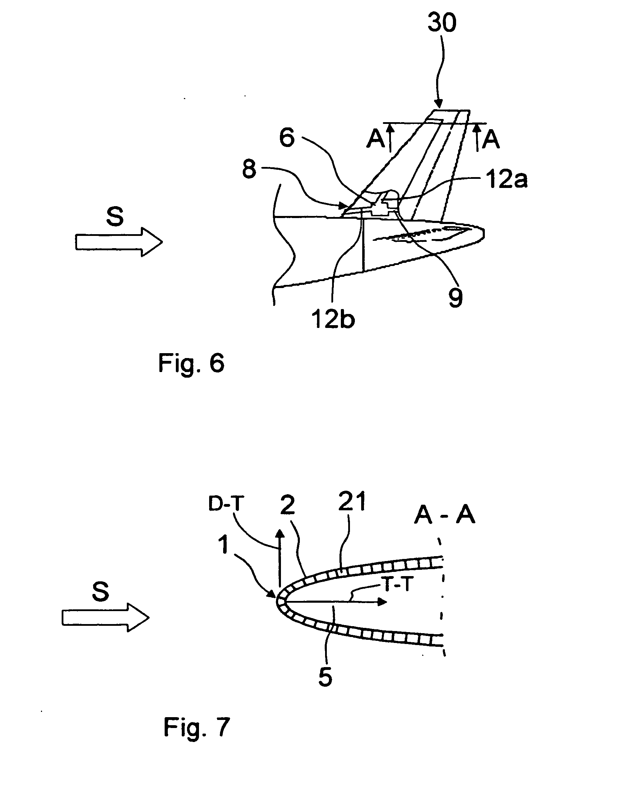

Die Fig. 6 und 7 zeigen weitere Ausführungsformen der vorliegenden Erfindung, wobei der Strömungskörper ein Seitenleitwerk 30 ist. In Fig. 5 ist ein Schnitt durch das Leitwerk 30 entlang der Schnittlinie A-A aus Fig. 22 dargestellt. Die Strömungsbeeinflussungs-Vorrichtung 1 ist dabei an einer Außenseite des Leitwerks 30 und unterhalb derselben angeordnet. Die Funktionsweise basiert auf dem gleichen physikalischen Prinzip, das mit Bezug zur ersten Ausführungsform der Erfindung erläutert wurde. Zum Betrieb der Saugvorrichtung 6 wird Luft aus dem Bereich des Staupunktes 1, also aus dem an der der Strömung zugewandten Vorderkante gelegenen Bereich verwendet, wobei in der in der Figur 22 gezeigten Ausführungsform ein Staupunktbereich verwendet wird, der sich am Höhenleitwerk im Bereich des Rumpfübergangs 8 befindet. Generell kann als Treibfluid Luft aus dem Staubereich entlang der vordersten Kante des Leitwerks verwendet werden. Bei dieser Ausführungsform verläuft der Verbindungskanal 5 entlang der Spannweitenrichtung des Seitenleitwerks 30, d.h. entlang der Z-Richtung des Flugzeugs. Auch erstreckt sich der Verbindungskanal 5 entsprechend der Erstreckung des perforierten Bereichs entlang der Strömungsrichtung F in der Tiefenrichtung des Leitwerks.

Bei den Ausführungsformen der Erfindung können die Mikroperforationen der Strömungsbeeinflussungs-Vorrichtung 1 in die jeweilige Oberfläche eingelassen sein, wobei diese im Wesentlichen bündig mit dem Konturverlauf der Oberfläche der Außenseite 31a enden, um auf diese Weise mikro-perforierte Saugpaneele zu bilden.

Bei den Ausführungsformen der Erfindung kann die Auslassvorrichtung 9 als ein Enddiffusor der Saugvorrichtung 6 ausgebildet sein, über den die abgesaugte Luft und/oder das aufgenommene Treibmedium ausgeführt wird, wobei dieser Enddiffusor derart aufgeführt ist, dass mit diesem die Austrittsverluste reduziert werden.

Die mit Bezug auf die erste Ausführungsform genannten Abmessungen der Saugkammer 21, der Blende 22 sowie der Mikroperforationen können auch für die zweite Ausführungsform vorgesehen sein.

In einer weiteren, alternativen Ausführungsform der Erfindung, die in den Figuren nicht dargestellt ist, sind die Flugzeugtragflächen bzw. die Flügel 30" oder das Höhenleitwerk 30' als Strömungskörper im Sinne der Erfindung vorgesehen. In diesen Ausführungsformen entspricht der strukturelle Aufbau der zweiten Ausführungsform der Erfindung und somit der Darstellung in den Figuren 22 und 5 mit Bezug zu dem Seitenleitwerk 30. Bei den Strömungskörpern nach der Erfindung handelt es sich vorzugsweise um Flugzeug-Strukturbauteile, die sich im Wesentlich flächig von dem Flugzeugrumpf aus weg erstrecken. Bei diesen Komponenten strömt das den Strömungskörper umströmende Fluid den Strömungskörper aus einer Anströmrichtung F an. Ein Teil des Luftstroms trifft dabei im Wesentlichen rechtwinklig auf einen der Strömung zugewandten Bereich oder eine vordere Kante des Strömungskörpers, dem Staupunktbereich, des Strömungskörpers. Die seitlich vorbeiströmenden Teilströmungen umfließen im Wesentlichen den Strömungskörper in deren Strömungskörper-Tiefenrichtung (z.B. die Tragflügel-Tiefenrichtung T-T). Das Treibfluid, zum Betreiben der Saugvorrichtungen 6 wird im Bereich der Staupunkte der Strömung entnommen. Die Staupunkte sind dabei im Bereich der Übergänge von dem Flugzeugrumpf zu den Leitwerken 30, 30' bzw. zu dem Tragflächen 30". Darüber hinaus oder alternativ können auch im Bereich der vorderen Kanten der Leitwerke 30, 30' oder der Flügel 30" Öffnungen 7 als Einlass für die Staufluid-Zufuhrleitung 11 vorgesehen sein. Die vorderen Kannten sind dabei diejenigen Kanten, die in der X-Richtung des Flugzeugs liegen, also diejenigen Kanten, die in normalen Flugzuständen des Flugzeugs der Strömung zugewandt sind.

Die Strömungsbeeinflussungs-Vorrichtung 1 wird nach einer bevorzugten Ausführungsform der Erfindung auf eine oder die Reiseflugkonfiguration abgestimmt, so dass die Strömungsbeeinflussungs-Vorrichtung 1 in davon abweichenden Flugzuständen wie Start, Steigflug, Sinkflug und Landung die nicht in ihrem optimalen Betriebsbereich arbeitet. Aus diesem Grund kann vorgesehen sein, dass die Strömungsbeeinflussungs-Vorrichtung 1 zu- und abschaltbar ausgeführt ist. Für diesen Fall kann die Strömungsbeeinflussungs-Vorrichtung 1 eine Verschließvorrichtung aufweisen, die beispielsweise durch eine Klappe realisiert ist, die an der Öffnung 7 für die Stauluft-Zufuhrleitung angeordnet ist und diese aufgrund der Ansteuerung einer entsprechenden, mit dieser funktional verbundenen Ansteuerungsvorrichtung verschließen oder öffnen kann. Die Ansteuerungsvorrichtung kann insbesondere mit der Flugführungsvorrichtung verbunden sein, die die Flugzustände ermittelt, an denen die Klappe geöffnet oder geschlossen sein soll.

Mit einer solchen Klappe kann durch Verschließen der Öffnung 7 die Strömung in der Staufluid-Zufuhrleitung 11 unterbrochen werden. Dadurch gelangt kein Treibfluid mehr in die Saugvorrichtung 6, so dass auch kein Unterdruck in den Saugkammern 21 erzeugt wird. Alternativ hierzu kann die Verschließvorrichtung auch als eine Drosselklappe an dem ersten Einlass 12a vorgesehen sein, durch die der Einlass 12a vollständig verschließbar ist. In geschlossenem Zustand strömt dann Treibfluid durch die Staufluid-Zufuhrleitung 11 über die Saugvorrichtung 6 direkt in die Auslassvorrichtung 9, wobei jedoch kein Unterdruck in dem Verbindungskanal 5 und den Saugkammer 21 erzeugt wird. Durch Überführen der Staudruckklappe und/oder der Drosselklappe in einen geöffneten Zustand bzw. in einen geschlossenen Zustand kann die Strömungsbeeinflussungs-Vorrichtung 1 zu- oder abgeschaltet werden.

Mit Bezug auf Fig. 1 sollen im Folgenden die Segmente 3 beschrieben werden, in dessen Bereichen die Strömungsbeeinflussungs-Vorrichtung angeordnet sein kann. An den Tragflächen bzw. Flügeln 30" des Flugzeuges, sowie an dem Seitenleitwerk 30 und dem Höhenleitwerk 30' sind die Segmente 3 eingezeichnet. Diese Segmente erstrecken sich an der Oberfläche der Außenseite 31 a in einer Tiefenrichtung des Leitwerks, d.h. in X-Richtung bezogen auf das Flugzeug-Koordinatensystem, vorzugsweise ausgehend von einer Vorderkante des Leitwerks 30 bzw. des Flügels 30". Die Segmente 3 erstrecken sich in diesem Ausführungsbeispiel über einen Bereich von 5% bis 75% der Oberfläche des Leitwerks in Leitwerktiefenrichtung X. In Spannweitenrichtung Z bzw. Y erstreckt sich das Segment 3 ebenfalls in einem Bereich von 5% bis 95% der Oberfläche beginnend von dem Staupunkt des Leitwerks, der sich an der vordersten Kante des Leitwerks befindet. Generell müssen die Segmente jedoch nicht von der jeweiligen Vorderkante ausgehen, sondern können auch in einem Oberflächenbereich des Flügels oder Leitwerks angeordnet sein. Dabei können sich die Segmente auf der Oberseite und/oder der Unterseite des Flügels oder des Leitwerks erstrecken.

In der Fig. 1 sind beispielsweise Triebwerksgondeln 20 dargestellt, die solche mit den Perforationsöffnungen versehenen Segmente 3 aufweisen, die zu einer Strömungsbeeinflussungs-Vorrichtung 1 gehören. Die Segmente 3 können in Umfangsrichtung des Triebwerks, d.h. um die Längsachse A des Triebwerks herum, sich über 360° des Umfangs erstrecken. In Triebwerksgondeltiefenrichtung d.h. in X-Richtung erstreckt sich das jeweilige Segment 3 über einen Bereich von 0% bis 50% der Oberfläche der Außenseite 31a der Triebswerksgondel 20. Das heißt, beginnend vom Staupunkt, der sich an einer vordersten Kante der Triebwerksgondel befindet, entlang der Oberfläche der Außenseite 31a in Richtung der Triebwerkslängsachse, d.h. in Triebwerksgondeldickenrichtung X, breitet sich das Segment 3 aus.

Die Auslassvorrichtung zum Ausleiten des von der Ansaugvorrichtung angesaugten Fluids kann generell auf einer der Strömung abgewandten Oberfläche des Flugzeugs oder des jeweiligen Strömungskörpers angeordnet sein.

Die beschriebenen Ausführungsformen der vorliegenden Erfindung sowie deren Merkmale können teilweise oder als Ganzes miteinander kombiniert werden.

## Patentansprüche

1. Strömungskörper (10) insbesondere für Luftfahrzeuge, aufweisend eine Außenschale (31), an der sich bei einer bestimmungsgemäßen Umströmung des Strömungskörpers (10) durch ein Fluid in einer Anströmrichtung (S) ein Stauluftbereich (F1) und ein in Strömungsrichtung (9) hinter diesem gelegener Umströmungsbereich (F2) ergibt, und mindestens eine Strömungsbeeinflussungs-Vorrichtung (1), die aufweist:
■ eine Mehrzahl von durch die Außenschale (31) durchgehenden Mikroperforationen (2), die in zumindest einem im Umströmungsbereich (F2) gelegenen Segment (3) der Außenschale (31) angeordnet sind;
■ eine Mehrzahl von jeweils im Inneren des Strömungskörpers (K) an der Außenschale (31) anliegenden Saugkammern, deren obere Wandung jeweils Teil der Außenhaut ist oder an dieser anliegt, wobei die Mikroperforationen (2) in die Saugkammern hineinreichen, und deren untere Wandung jeweils zumindest eine Blendenöffnung oder einen Ventildurchlass aufweist, wobei Seitenwandungen der Saugkammern deren Innenräume gegeneinander abgrenzen,
■ mindestens ein Verbindungskanal (5), der quer zur Strömungsrichtung (S) und von der Außenschale (31) aus gesehen unterhalb der Saugkammern (21) gelegen ist,
■ zumindest eine an den Verbindungskanal (5) angeschlossene Saugvorrichtung (6) mit einer ersten Einlassöffnung (12a) zum Absaugen von durch die Mikroperforationen (2) eingetretenen Fluid, die mit dem Verbindungskanal (5) in Verbindung steht,
**dadurch gekennzeichnet, dass**
■ die Strömungsbeeinflussungs-Vorrichtung (1) zusätzlich eine Staufluid-Zufuhrleitung (11) aufweist, die eine im Stauluftbereich (F1) gelegene Staufluid-Einlassöffnung (7) aufweist, und
■ dass die Saugvorrichtung (6) ein eine Ableitungskammer (60) bildendes Saugvorrichtungs-Gehäuse (51) mit der Einlassöffnung (12a) und einer Auslassöffnung (54) und eine Düse (60) mit einer Einlassöffnung (12b, 63), an die die Staufluid-Zufuhrleitung (11) angeschlossen ist, aufweist,
wobei die Auslassöffnung (54) in der Verlängerung der Längsrichtung (LD) der Düse (60) gelegen ist.

2. Strömungskörper (10) nach dem Anspruch 1, **dadurch gekennzeichnet, dass** die Saugvorrichtung (6) derart in dem Strömungskörper (10) positioniert ist, dass die Auslassöffnung (54) in der Strömungsrichtung (S) gesehen im Bereich zwischen 40 % und 60 % der gesamten Strömungskörpertiefe gelegen ist.

3. Strömungskörper (10) nach dem Anspruch 1 oder 2, **dadurch gekennzeichnet, dass** die gesamte sich in der Strömungsrichtung (S) erstreckende Länge des Saugvorrichtungs-Gehäuses (51) zwischen 700 mm und 900 mm beträgt.

4. Strömungskörper (10) nach dem Anspruch 1, 2 oder 3, **dadurch gekennzeichnet, dass** die Mikroperforationen (2) einen Durchmesser zwischen 10 µm und 1.000 µm haben.

5. Strömungskörper (10) nach einem der voranstehenden Ansprüche, **dadurch gekennzeichnet, dass** der Abstand zwischen jeweils zwei benachbarten Mikroperforationen (2) zwischen 0,1 mm und 2,5 mm beträgt.

6. Strömungskörper (10) nach einem der voranstehenden Ansprüche, **dadurch gekennzeichnet, dass** die Strömungsbeeinflussungs-Vorrichtung (1) derart ausgeführt ist, dass an der Auslassöffnung (54) des Saugvorrichtungs-Gehäuses (51) ein Fluidmassenstrom vorliegt, bei dem das Fluid an der Auslassöffnung (54) auf den Umgebungsdruck des Strömungskörpers im jeweiligen Betriebszustand oder auf den an in der Strömungsrichtung (S) gesehen derselben. Position des Strömungskörpers (S) an dessen Außenseite herrschenden Unterdruck jeweils mit einer maximalen Abweichung von 20 % entspannt ist.

7. Strömungskörper (10) nach einem der vorhergehenden Ansprüche, wobei die Staufluid-Zufuhrleitung (11) an einer Öffnung (7) in den Strömungskörper (10) einmündet, wobei die Öffnung (7) derart an der Außenseite des Strömungskörpers (10) angeordnet ist, dass in Strömungsrichtung (S) gesehen der Staupunkt des Strömungskörpers ohne der Öffnung innerhalb der Öffnung gelegen ist.

8. Strömungskörper (10) nach einem der vorgehenden Ansprüche, **dadurch gekennzeichnet, dass** die Auslassvorrichtung (9) an einer Mischkammer angeschlossen und als Diffusor ausgebildet ist, der sich im Inneren des Strömungskörpers (10) öffnet, dass der Strömungskörper in seinem in Strömungsrichtung gesehen hinteren Bereich eine Auslassvorrichtung aufweist, durch die im Inneren (10a) des Strömungskörpers (10) befindliche Luft in die Umgebung des Strömungskörpers (10) entweichen kann.

9. Strömungskörper (10) nach einem der vorgehenden Ansprüche, **dadurch gekennzeichnet, dass** der Strömungsköper (10) eine Triebwerksgondel (20) ist, mit einer im Wesentlichen zylindrischen äußeren Gestalt, wobei die Längsachse (A) der Triebwerksgondel (20) im Wesentlichen parallel zur Anströmrichtung (F) des Fluids verläuft und/oder sich der Verbindungskanal (5) in Umfangsrichtung um die Längsachse (A) herum erstreckt.

10. Strömungskörper (10) nach Anspruch 9, **dadurch gekennzeichnet, dass** das Segment (3) in der Außenseite (31 a), in dem die Strömungsbeeinflussungs-Vorrichtung (1) angeordnet ist, sich in Umfangsrichtung zumindest teilweise erstreckt und in einer Längrichtung (T-B) der Triebwerksgondel (20) sich über einen Bereich von 0% bis 50% der Oberfläche, beginnend an dem Staupunkt der Triebwerksgondel (20), erstreckt.

11. Strömungskörper (10) nach einem der vorgehenden Ansprüche, **dadurch gekennzeichnet, dass** der Strömungskörper (10) Teil eines Flugwerks (30, 30', 30") ist, mit einer Flugwerk-Tiefenrichtung (x), einer Flugwerk-Spannweitenrichtung (Y, Z) und einer Flugwerk-Dickenrichtung (Z, Y), wobei sich die Verbindungskanal (5) entlang der Flugwerk-Spannweitenrichtung (Y, Z) erstreckt.

12. Strömungskörper (10) nach dem Anspruch 11, **dadurch gekennzeichnet, dass** das Segment (3) in der Außenseite (31 a), in dem die Strömungsbeeinflussungs-Vorrichtung (1) angeordnet ist, sich in der Flugwerk-Spannweitenrichtung (y, z) zumindest teilweise erstreckt und in der Flugwerk-Tiefenrichtung (x) sich über einen Bereich von 0% bis 75% der Oberfläche, beginnend von dem Staupunkt des Flugwerks (30, 30', 30"), erstreckt.

13. Strömungskörper (10) nach einem der vorgehenden Ansprüche, **dadurch gekennzeichnet,**
**dass** der Strömungskörper (10) Teil eines Flugwerks ist,
**dass** das Saugvorrichtungs-Gehäuse (51) zwei Einlassöffnungen (52a, 52b) aufweist, die einander gegenüberliegend angeordnet sind,
**dass** der Strömungsköper eine Außenschale mit einem ersten (F2) und einem zweiten (F3) Umströmungsbereich und einem zwischen diesen gelegenen Stauluftbereich (F1) aufweist, wobei die Außenseiten des ersten und des zweiten Umströmungsbereichs entgegengesetzt zueinander gelegen sind.

## Claims

1. A flow body (10), in particular for aircraft, comprising an outer shell (31) and at least one flow control device (1), wherein at the outer shell (31) results: a ram air region (F1) which is brought about, in the presence of a predetermined flow around the flow body (10) by a fluid in a direction of a free stream flow (S), and an enveloping flow region (F2) located behind the said ram air region when viewed in the flow direction (9), the at least one flow control device (1) comprising:
■ a plurality of micro-perforations (2) penetrating the outer shell (31), which are arranged in at least one segment (3) of the outer shell (31) that is situated in the enveloping flow region (F2);
■ a plurality of suction chambers each adjoining the inside of the flow body (K) at the outer shell (31) thereof, wherein their upper walls are each part of or adjoin the outer skin such that the micro-perforations (2) extend inside the suction chambers, and their lower walls each present at least one orifice opening or a valve passage, with sidewalls of the suction chambers delimiting the inner spaces thereof from each other,
■ at least one connecting passage (5) which is situated below the suction chambers (21) when viewed in a direction across the flow direction (S) and when viewed from the outer shell (31),
■ at least one suction device (6) connected to the connecting passage (5) and including a first inlet opening (12a) for ingesting fluid having entered through the micro-perforations (2), which is communicated with the connecting passage (5),
**characterized in that**
■ the flow control device (1) additionally comprises a ram fluid feed line (11) which includes a ram fluid inlet opening (7) situated in the ram air region (F1), and
■ the suction device (6) comprises a suction device housing (51) forming an evacuation chamber (60) and including the inlet opening (12a) and an outlet opening (54), and a nozzle (60) including an inlet opening (12b, 63) to which the ram fluid feed line (11) is connected,
wherein the outlet opening is situated in the prolongation of the longitudinal direction (LD) of the nozzle (60).

2. The flow body (10) according to claim 1 or 2, **characterized in that** the suction device (6) is positioned in the flow body (10) such that the outlet opening (54), when viewed in the flow direction (S) of the flow body (10), is situated in the range between 40 % and 60 % of the entire flow body chord.

3. The flow body (10) according to claim 1, **characterized in that** the entire length of the suction device housing (51) extending in a flow direction (S) of the flow body (10) amounts to a value between 700 mm and 900 mm.

4. The flow body (10) according to claim 1, 2 or 3, **characterized in that** the microperforations (2) have a diameter of between 10 µm and 1000 µm.

5. The flow body (10) according to any one of the preceding claims, **characterized in that** the distance between two respective adjacent micro-perforations (2) amounts to a value between 0.1 mm and 2.5 mm.

6. The flow body (10) according to any one of the preceding claims, **characterized in that** the flow control device (1) is realized such that at the outlet opening (54) of the suction device housing (51) a fluid mass flow is present at which the fluid at the outlet opening (54) is lowered to the ambient pressure of the flow body (S) in the respective operational condition or to the negative pressure prevailing at the outer side thereof at the same position of the flow body (S), when viewed in the flow direction (S), with a respective deviation of 20 % at the most.

7. The flow body (10) according to any one of the preceding claims, wherein the ram fluid feed line (11) merges into the flow body (10) at an opening (7), with the opening (7) being arranged on the outside of the flow body (10) such that in the absence of the opening the stagnation point of the flow body is situated within the opening when viewed in the flow direction (S).

8. The flow body (10) according to any one of the preceding claims, **characterized in that** the outlet device (9) is connected to a mixing chamber and has the form of a diffusor which opens on the interior of the flow body (10), with the flow body having in its rear area, when viewed in the flow direction, an outlet device through which air present in the interior (10a) of the flow body (10) may discharge to the outside of the flow body (10).

9. The flow body (10) according to any one of the preceding claims, **characterized in that** the flow body (10) is an engine nacelle (20) having a substantially cylindrical external configuration, with the longitudinal axis (A) of the engine nacelle (20) running substantially in parallel with the direction of freestream flow (F) of the fluid, and/or the connecting passage (5) extending around the longitudinal axis (A) in a circumferential direction.

10. The flow body (10) according to claim 9, **characterized in that** the segment (3) in the outer side (31 a) in which the flow control device (1) is arranged extends at least partly in a circumferential direction and extends in a longitudinal direction (T-B) of the engine nacelle (20) over a range of 0 % to 50 % of the surface starting from the stagnation point of the engine nacelle (20).

11. The flow body (10) according to any one of the preceding claims, **characterized in that** the flow body (10) is part of an airframe (30, 30', 30") having an airframe chord direction (x), an airframe spanwise direction (Y, Z), and an airframe thickness direction (Z, Y), with the connecting passage (5) extending along the airframe spanwise direction (Y, Z).

12. The flow body (10) according to claim 10, **characterized in that** the segment (3) in the outer side (31 a) having the flow control device (1) arranged therein extends at least partly in the airframe spanwise direction (y, z) and extends in the airframe chord direction (x) over a range of 0 % to 75 % of the surface starting from the stagnation point of the airframe (30, 30', 30").

13. The flow body (10) according to any one of the preceding claims, **characterized in that**
the flow body (10) is part of an airframe,
the suction device housing (51) comprises two inlet openings (52a, 52b) arranged so as to face each other,
the flow body comprises an outer shell having a first (F2) and a second (F3) enveloping flow region and a ram air region (F1) situated between these, with the outer sides of the first and second enveloping flow regions being situated opposite to each other.

## Revendications

1. Corps d'écoulement (10) en particulier pour avions, présentant une coque extérieure (31) sur laquelle se produit, lors d'un écoulement conforme autour du corps d'écoulement (10) par un fluide dans un sens d'écoulement (S), une zone d'air dynamique (F1) et une zone d'écoulement périphérique (F2) placée derrière celle-ci dans le sens d'écoulement (9), et au moins un dispositif influant sur l'écoulement (1), qui présente :
■ une pluralité de microperforations (2) passant à travers la coque extérieure (31) qui sont disposées dans au moins un segment (3) de la coque extérieure (31) disposé dans la zone d'écoulement périphérique (F2) ;
■ une pluralité de chambres d'aspiration reposant respectivement à l'intérieur du corps d'écoulement (K) sur la coque extérieure (31) dont la paroi supérieure fait partie respectivement de l'enveloppe extérieure ou repose sur celle-ci, les microperforations (2) allant jusque dans les chambres d'aspiration, et dont la paroi inférieure présente respectivement au moins une orifice à volet ou une admission de soupape, sachant que des parois latérales des chambres d'aspiration délimitent l'un contre l'autre leurs espaces intérieurs,
■ au moins un canal de liaison (5), disposé transversalement au sens d'écoulement (S) et, vu depuis la coque extérieure (31), en-dessous des chambres d'aspiration (21),
■ au moins un dispositif d'aspiration (6) raccordé au canal de liaison (5) comprenant un premier orifice d'admission (12a) pour aspirer du fluide entré par les microperforations (2) qui est en liaison avec le canal de liaison (5),
**caractérisé en ce que**
■ le dispositif influant l'écoulement (1) présente en outre une conduite d'alimentation de fluide dynamique (11) qui présente un orifice d'admission de fluide dynamique (7) disposé dans la zone d'air dynamique (F1), et
■ que le dispositif d'aspiration (6) présente un carter de dispositif d'aspiration (51) avec l'orifice d'admission (12a) et un orifice d'évacuation (54), formant une chambre de dérivation (60), et une tuyère (60) avec un orifice d'admission (12b, 63) sur laquelle la conduite d'alimentation de fluide dynamique (11) est raccordée,
sachant que l'orifice d'évacuation (54) est disposé dans le prolongement du sens longitudinal (LD) de la tuyère (60).

2. Corps d'écoulement (10) selon la revendication 1, **caractérisé en ce que** le dispositif d'aspiration (6) est ainsi positionné dans le corps d'écoulement (10) que l'orifice d'évacuation (54), vu dans le sens d'écoulement (S), est disposé dans la plage entre 40 % et 60 % de la profondeur totale du corps d'écoulement.

3. Corps d'écoulement (10) selon la revendication 1 ou 2, **caractérisé en ce que** la longueur totale du carter de dispositif d'aspiration (51) s'étendant dans le sens d'écoulement (S) fait entre 700 mm et 900 mm.

4. Corps d'écoulement (10) selon la revendication 1, 2 ou 3, **caractérisé en ce que** les microperforations (2) ont un diamètre entre 10 µm et 1 000 µm.

5. Corps d'écoulement (10) selon l'une des revendications précédentes, **caractérisé en ce que** l'espacement entre respectivement deux microperforations (2) adjacentes fait entre 0,1 mm et 2,5 mm.

6. Corps d'écoulement (10) selon l'une des revendications précédentes, **caractérisé en ce que** le dispositif influant l'écoulement (1) est ainsi conçu qu'il se produit sur l'orifice d'évacuation (54) du carter de dispositif d'aspiration (51), un écoulement de masse fluidique dans lequel le fluide sur l'orifice d'évacuation (54) est détendu, respectivement avec un écart maximal de 20 %, à la pression ambiante du corps d'écoulement dans l'état de fonctionnement respectif ou à la dépression régnant sur le côté extérieur du corps d'écoulement (S) à sa même position, vu dans le sens d'écoulement (S).

7. Corps d'écoulement (10) selon l'une des revendications précédentes, dans lequel la conduite d'alimentation de fluide dynamique (11) débouche sur un orifice (7) dans le corps d'écoulement (10), sachant que l'orifice (7) est ainsi disposé sur le côté extérieur du corps d'écoulement (10), que, vu dans le sens d'écoulement (S), le point de stagnation du corps d'écoulement sans l'orifice, est placé à l'intérieur de l'orifice.

8. Corps d'écoulement (10) selon l'une des revendications précédentes, **caractérisé en ce que** le dispositif d'évacuation (9) est raccordé à une chambre de mélange et est conçu en tant que diffuseur qui s'ouvre à l'intérieur du corps d'écoulement (10), que le corps d'écoulement présente dans sa partie arrière, vu dans le sens d'écoulement, un dispositif d'évacuation à travers lequel de l'air se trouvant à l'intérieur (10a) du corps d'écoulement (10) peut s'échapper dans l'environnement du corps d'écoulement (10).

9. Corps d'écoulement (10) selon l'une des revendications précédentes, **caractérisé en ce que** le corps d'écoulement (10) est une nacelle-moteur (20) avec une forme extérieure essentiellement cylindrique, sachant que l'axe longitudinal (A) de la nacelle-moteur (20) est essentiellement parallèle au sens d'afflux (F) du fluide et/ou que le canal de liaison (5) s'étend autour de l'axe longitudinal (A) dans le sens périphérique.

10. Corps d'écoulement (10) selon la revendication 9, **caractérisé en ce que** le segment (3) dans le côté extérieur (31 a) dans lequel le dispositif influant l'écoulement (1) est disposé, s'étend au moins partiellement dans le sens périphérique et s'étend dans un sens longitudinal (T-B) de la nacelle-moteur (20) sur une plage de 0% à 50% de la surface, en commençant sur le point de stagnation de la nacelle-moteur (20).

11. Corps d'écoulement (10) selon l'une des revendications précédentes, **caractérisé en ce que** le corps d'écoulement (10) fait partie d'une cellule d'avion (30, 30', 30"), avec un sens de profondeur de cellule d'avion (x), un sens d'envergure de cellule d'avion (Y, Z) et un sens d'épaisseur de cellule d'avion (Z, Y), sachant que le canal de liaison (5) s'étend le long du sens d'envergure de cellule d'avion (Y, Z).

12. Corps d'écoulement (10) selon la revendication 11, **caractérisé en ce que** le segment (3) dans le côté extérieur (31 a) dans lequel le dispositif influant l'écoulement (1) est disposé, s'étend au moins partiellement dans le sens d'envergure de cellule d'avion (y, z) et s'étend dans le sens de profondeur de cellule d'avion (x) dans une plage de 0% à 75% de la surface, en commençant par le point de stagnation de la cellule d'avion (30, 30', 30").

13. Corps d'écoulement (10) selon l'une des revendications précédentes, **caractérisé en ce que**,
le corps d'écoulement (10) fait partie d'une cellule d'avion,
que le carter de dispositif d'aspiration (51) présente deux orifices d'admission (52a, 52b) qui sont disposés l'un en face de l'autre,
que le corps d'écoulement présente une coque extérieure avec des première (F2) et seconde (F3) zones d'écoulement et une zone d'air dynamique (F1) disposée entre celles-ci, sachant que les côtés extérieurs des première et seconde zones d'écoulement sont disposés en étant opposés l'un à l'autre.
